# FASCICULE DE BREVET EUROPEEN

(11) **EP 0 749 376 B1**
(45) Date de publication et mention de la délivrance du brevet: **12.05.1999**
(21) Numéro de dépôt: 95942255.1
(22) Date de dépôt: 13.12.1995
(51) Int. Cl.: B60N 3/14

(54) **CORPS D'ALLUMAGE POUR ALLUME-CIGARES, NOTAMMENT DE VEHICULE AUTOMOBILE**
ZIGARETTENANZÜNDERKÖRPER, INSBESONDERE FÜR KRAFTFAHRZEUGE
LIGHTER BODY FOR A CIGARETTE LIGHTER, PARTICULARLY IN MOTOR VEHICLES

(30) Priorité: 13.12.1994 FR 9415102
(43) Date de publication de la demande: 27.12.1996
(73) Titulaire: VALEO VISION, 93012 Bobigny Cédex (FR)
(72) Inventeur: THIVET, Gilles, F-81290 Labruguière (FR)
(74) Mandataire: Gamonal, Didier
(86) Numéro de dépôt international: FR9501657
(87) Numéro de publication internationale: WO9618523

(56) Documents cités:
- FR-A- 2 630 057
- GB-A- 1 139 159
- US-A- 2 701 297
- US-A- 4 527 048
- US-A- 4 544 226

## Description

La présente invention concerne un allume-cigares notamment pour véhicule automobile (cf. US-A-2 701 297, correspondant au préambule de la revendication indépendante).

Elle se rapporte plus particulièrement au corps d'allumage que comporte un tel allume-cigares.

Ainsi qu'on le sait, le corps d'allumage sert de réceptacle à un bouchon chauffant amovible doté d'un corps de chauffage pour allumer le cigare ou la cigarette et comporte une douille d'allumage électriquement conductrice, avec un fond, portant intérieurement à isolation électrique, par l'intermédiaire d'un organe de fixation et d'une première pièce d'isolation électrique, un organe de prise de courant usuellement en forme de bilame.

Cette douille d'allumage comporte des ouvertures de dégagement en regard des lames du bilame, propre à être relié à la borne positive de la source de tension, tandis que la douille d'allumage est propre à être reliée à la borne négative de la source de tension.

En pratique le corps d'allumage est implanté dans une région où existe de nombreux fils et/ou câbles électriques.

Pour éviter que ces fils et câbles ne viennent toucher les lames du bilame accessibles à travers les ouvertures de dégagement, on a déjà proposé dans le document US-A-2 701 297 d'entourer la douille d'allumage par une douille de masquage électriquement conductrice servant également à l'assemblage de la douille d'allumage.

Plus précisément la douille d'allumage est enfilée dans une ouverture d'une paroi fixe du véhicule, telle que le tableau de bord ou une console de celui-ci servant à la fixation et au montage du corps d'allumage, et est maintenue captive à l'aide de la douille de masquage vissée sur une partie filetée portée par l'extrémité arrière de la douille d'allumage.

Ainsi l'extrémité avant ouverte de la douille de masquage est en appui contre la face arrière de la paroi fixe, tandis que l'extrémité avant ouverte de la douille d'allumage présente un rebord globalement d'orientation transversale en appui sur la face avant ou supérieure d'un anneau d'extrémité d'une bague éclairante, lequel anneau, par sa face arrière, est en appui sur la face avant ou supérieure de la paroi fixe.

Cette paroi fixe est ainsi prise en sandwich entre l'anneau de la bague éclairante et l'extrémité avant ouverte de la douille de masquage.

Il en résulte que l'assemblage de la douille de masquage avec la douille d'allumage est réalisé par l'arrière de la paroi fixe et que cet assemblage du type vis-écrou complique la réalisation des douilles.

En outre dans ce document la paroi fixe est électriquement conductrice en sorte que le retour du courant à la masse est réalisé à l'aide de ladite paroi.

Cela nécessite donc de déstandardiser la douille d'allumage. De plus la douille de masquage porte une source d'éclairage, en sorte qu'il faut créer une ouverture dans ladite douille de masquage pour l'éclairage de la bague éclairante.

La présente invention a pour objet de pallier ces inconvénients et donc de créer, de manière simple et économique, un corps d'allumage à douille d'allumage standard et douille de masquage simplifiée, dont le montage est réalisé par l'avant de la paroi fixe.

Suivant l'invention un corps d'allumage du type sus-indiqué est caractérisé en ce que la douille de masquage présente un fond adjacent et relié électriquement au fond de la douille d'allumage en étant assemblé à la douille d'allumage par l'intermédiaire de l'organe de fixation traversant pour ce faire à isolation électrique les fonds des douilles d'allumage et de masquage, en ce que la bague éclairante entoure la douille de masquage et présente au moins une languette de fixation élastiquement déformable et propre à venir en contact avec la face arrière de la paroi fixe et en ce que des moyens de fixation interviennent entre la douille de masquage et la bague éclairante pour fixation de la douille de masquage à la bague éclairante.

Grâce à l'invention il est formé un ensemble unitaire douille de masquage - douille d'allumage faisant appel à une douille d'allumage standard et la douille de masquage est simplifiée car elle est dépourvue, tout comme la douille d'allumage, de partie filetée.

La bague éclairante permet un montage de l'ensemble des douilles de masquage et d'allumage par la face avant ou frontale de la paroi fixe. Cette bague est obtenue aisément par moulage et sert à l'accrochage de la douille de masquage et de l'ensemble précité.

En outre il n'y a pas besoin de pratiquer d'ouverture dans la bague de masquage puisque la bague éclairante entoure la bague de masquage et porte directement la source d'éclairage. L'éclairage de l'anneau de la bague éclairante est ainsi de meilleure qualité.

Avantageusement les moyens de fixation consistent en des moyens d'encliquetage intervenant entre la bague éclairante et la douille de masquage. Par exemple la bague éclairante présente des crans saillants intérieurement propres à s'engager dans des ouvertures associées pratiquées dans la paroi de la douille de masquage. La bague éclairante est donc en contact intime avec la douille de masquage.

Ainsi on enfile à force l'ensemble douille d'allumage - douille de masquage dans la bague éclairante, ce qui permet de réaliser par encliquetage une fixation de la douille de masquage avec la bague éclairante.

Avantageusement l'extrémité libre (ou avant) de la douille de masquage est engagée à centrage dans l'anneau de la bague éclairante. Ainsi la douille de masquage est maintenue de manière stable par la bague éclairante et les moyens de fixation, ainsi que les languettes de fixation, sont ménagés. Les contraintes dans la bague éclairante sont donc minimisées.

De préférence des moyens de centrage interviennent entre la douille de masquage et la douille d'allumage. Par exemple la douille de masquage peut présenter des pattes obtenues par découpe et pliage en contact avec la paroi de la douille d'allumage et ce au voisinage de l'extrémité ouverte de la douille de masquage. Ces moyens de centrage sont implantés axialement entre l'extrémité ouverte de la douille de masquage et les moyens de fixation.

Ainsi on ménage un espace calibré entre les parois des douilles d'allumage et de masquage en sorte que lorsque l'on introduit ou extrait le bouchon chauffant, on obtient une bonne stabilité et rigidité de l'ensemble avec ménagement de l'organe de fixation. Ce type de montage est donc fiable et a une grande durée de vie.

Il permet de ménager les moyens de fixation, d'éviter une déformation de la douille d'allumage et de maintenir un bon parallélisme entre les deux douilles même en cas de chauffage de la douille d'allumage.

En outre il favorise une bonne ventilation entre les douilles.

Dans une forme de réalisation la bague éclairante porte de manière amovible un boîtier d'éclairage contenant une ampoule d'éclairage.

Par exemple la bague éclairante présente une glissière pour le montage à la manière d'un tiroir du boîtier d'éclairage. Tout ceci est réalisé aisément car, de manière connue en soi, la bague éclairante est en matière plastique moulable.

Avantageusement des moyens d'indexation angulaires interviennent entre la bague éclairante et une rondelle d'isolation électrique portée extérieurement par la douille d'allumage pour faciliter l'enfilage de l'ensemble unitaire précité dans la bague éclairante et de réaliser de manière automatique la fixation de la douille de masquage, les crans des moyens d'encliquetage pénétrant de manière sûre dans leurs ouvertures associées.

La description qui va suivre illustre l'invention en regard des dessins annexés dans lesquels :

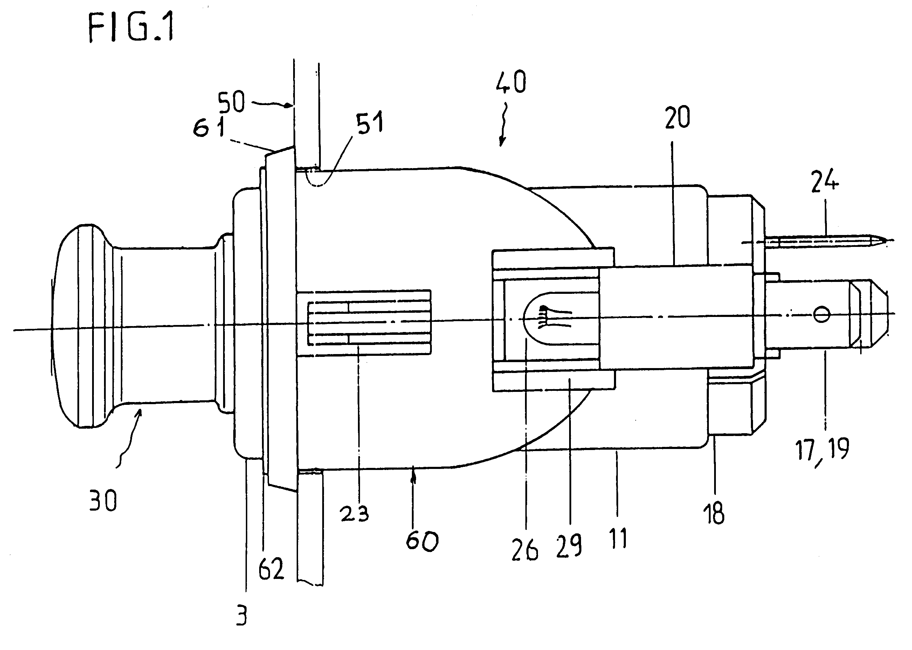

- la figure 1 est une vue d'un allume'cigares selon l'invention monté sur la paroi fixe d'un véhicule automobile ;
- la figure 2 est une vue en coupe axiale analogue correspondant celle de la figure 1 ;
- la figure 3 est une vue selon la flèche 3 de la figure 1 sans la paroi fixe ;
- la figure 4 est une vue partielle de la douille d'allumage montrant une de ces ouvertures de dégagement
- la figure 5 est une vue partielle selon la flèche 3 de la figure 2 ;
- la figure 6 est une vue partielle de la base de la languette d'alimentation associée à la douille de masquage.

Dans ces figures on a représenté un allume-cigares pour véhicule automobile comportant un bouchon chauffant amovible 30 et un corps d'allumage 40 formant réceptacle et prise de courant pour le bouchon 30.

Le corps d'allumage 40 présente une douille 6 d'allumage, électriquement conductrice, fermée à l'arrière par un fond, un organe de fixation 14 traversant ledit fond, un organe de prise de courant 12 monté à l'intérieur de la douille 6 et relié électriquement par l'organe de fixation 14 à une première pièce d'alimentation électrique 19 montée à l'extérieur de la douille 6, une première pièce d'isolation électrique 15 interposée entre l'organe de prise de courant 12 et le fond de la douille 6, une seconde pièce d'alimentation électrique 17 montée à l'extérieur de la douille 6 en étant adjacente au fond de celle-ci et reliée électriquement à ladite douille 6, une seconde pièce d'isolation électrique 18 interposée entre la première 19 et la seconde 17 pièce d'alimentation électrique, un élément de sécurité 16 présentant une languette de sécurité, globalement d'orientation axiale, propre à établir un court-circuit en cas de surchauffe du corps d'allumage 40, ledit organe de fixation 14, électriquement conducteur, traversant les pièces d'isolation électrique 15,18 pour assemblage des pièces d'alimentation électriques 19,17, de l'organe de prise de courant 12, et de l'élément de sécurité 16.

Les pièces 6,12,14,16,17,19, ici métalliques, sont donc électriquement conductrices, tandis que les pièces 15,18 sont électriquement isolantes en étant avantageusement en matière plastique moulable.

Plus précisément ici l'organe de fixation 14 consiste en une vis métallique, en variante en un rivet, l'organe de prise de courant 12 est un bilame, les pièces 17,19 consistent en des languettes globalement d'orientation axiale, ici à base de cuivre, et l'élément de sécurité 16 est un bilame monté tête-bêche par rapport au bilame 12 en étant distinct de celui-ci.

Ces bilames 12,16 ont en section globalement une forme de U avec une base en forme de disque et deux languettes, globalement diamétralement opposées et d'orientation axiale.

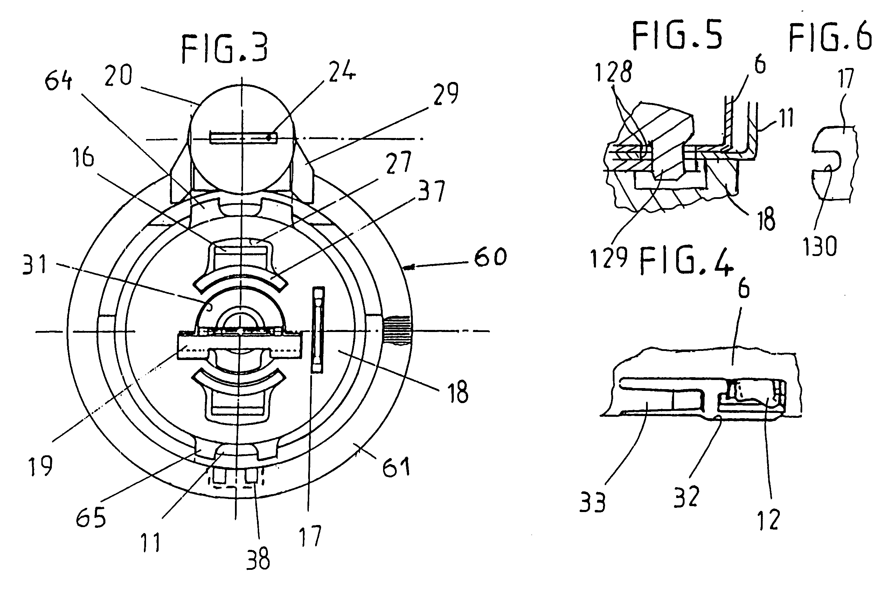

Les disques des bilames 12,16 sont en contact l'un avec l'autre, les lames du bilame 16 traversant le fond de la douille 6 à la faveur d'ouvertures 28, tandis que la douille 6 de forme cylindrique, ici en tôle emboutie, présente, en regard des lames du bilame 12 de prise de courant, deux ouvertures de dégagement 32, diamétralement opposées et délimitant également chacune une languette 33 (figure 4) pour la retenue du bouchon 30 en position d'attente.

La première pièce isolante 15 forme une entretoise axiale interposée entre la base du bilame 16 et le fond de la douille 6.

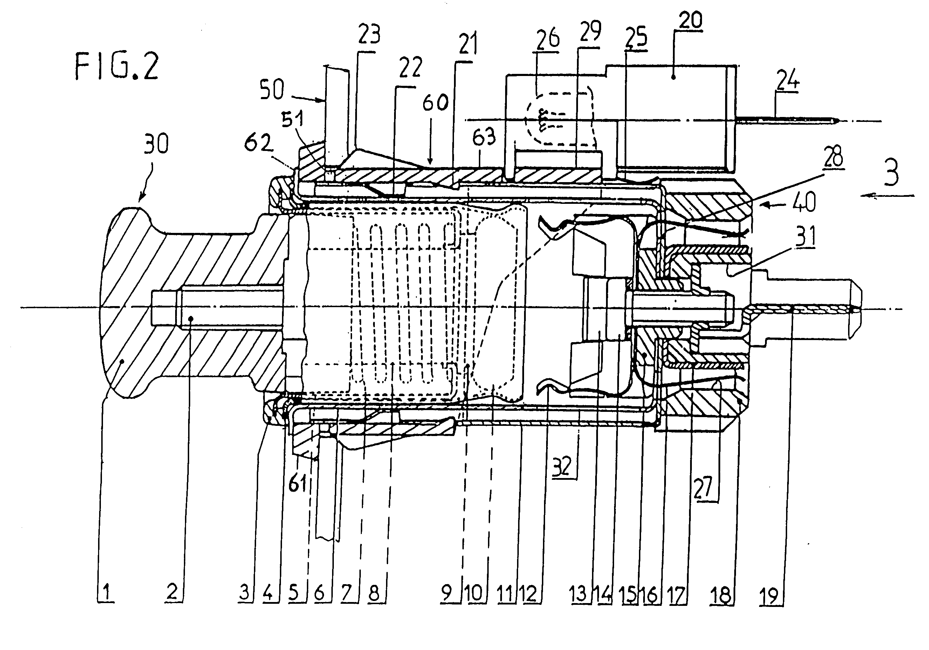

La deuxième pièce isolante 18 a globalement la forme d'une rondelle massive dotée d'une ouverture centrale traversante 31 pour passage de la vis 14 et de deux ouvertures latérales traversantes 27 pour, d'une part, le montage de deux parties incurvées 37 ici convexes (figure 3), d'orientation axiale, de la seconde languette 17 et, d'autre part, le logement à jeu des languettes du bilame 16, dont les extrémités libres ont une section globalement en forme de V (figure 2) pour contact ponctuel en cas de court-circuit avec les parties convexes 37, ici bombées en forme d'arc-de-cercle, de la languette 17.

L'ouverture 31 est étagée pour définition d'un épaulement. C'est sur cet épaulement que prend appui la base de la languette 19 en forme d'équerre. Cette base, parallèle au fond de la douille 6, est trouée centralement avec formation d'une cheminée taraudée pour le vissage de l'extrémité de la vis 14.

La languette 19 forme donc un écrou.

La languette 17 a globalement également une forme d'équerre avec une base parallèle à celle de la languette 19 et au fond de la douille 6. La rondelle isolante 18 forme donc une entretoise axiale entre les bases des languettes 17,19 à la faveur d'un fond délimité par l'ouverture étagée 31.

La rondelle 18 présente également (figure 3), globalement perpendiculairement aux ouvertures 27, une ouverture pour passage de manière complémentaire de la partie axiale de la languette 17.

L'ouverture 31 délimite également deux rainures, diamétralement opposées, pour le montage à la manière d'un tiroir de la partie axiale, pourvue d'un pli (figure 2), de la languette 19, qui s'étend ainsi perpendiculairement par rapport à la languette 17.

Ces languettes 17,19 sont immobilisées et positionnées (par coopération de formes) par la rondelle 18 et font saillies axialement par rapport à celle-ci en direction opposée au fond de la douille d'allumage 6. Ces languettes 17,19 sont épaulées à l'extérieur de la rondelle 18.

La rondelle 18 forme donc également une entretoise dans le sens transversal de la figure 2 entre les languettes 17,19.

Les lames du bilame 16 de sécurité et les parties 37 en arc-de-cercle de la languette 17 sont masquées par la rondelle 18 (figure 2) et ne s'étendent donc pas en saillie axiale par rapport à cette rondelle 18.

Chaque ouverture 27 présente également à sa base deux rainures arguées (figure 3) pour montage par enfilage des parties 37 à la manière d'un tiroir. Ces parties 37 sont issues de la base de la languette 17 et s'étendent axialement vers l'extérieur en sorte que l'extrémité de fixation de la languette 17 a globalement en section la forme d'un U avec deux branches 37 en arc-de-cercle. Ces parties 37, diamétralement opposées, sont en contact avec le bord inférieur correspondant, en forme d'arc-de-cercle, de l'ouverture 27 (figure 3).

Chaque ouverture 27 présente ainsi (figures 2 et 3) un bord supérieur d'orientation axiale, chanfreiné à chacune de ses extrémités, deux bords latéraux parallèles, globalement perpendiculaire au bord supérieur, et un bord inférieur, d'orientation axiale, en forme d'arc-de-cercle délimité latéralement par les rainures de montage des parties 37, lesdites rainures affectant les bords latéraux. En fonctionnement normal, les languettes du bilame 16 sont à distance chacune des bords latéraux et supérieurs de l'ouverture 27, ainsi que de la partie 37 concernée.

On appréciera que les chanfreins des bords supérieurs permettent d'éviter, en fonctionnement normal, tout contact entre, d'une part, la zone arrondie de raccordement de la lame du bilame 16 à sa base et le bord supérieur de l'ouverture 27, et, d'autre part, entre ce bord supérieur et l'extrémité en V de ladite lame.

Suivant une caractéristique la base de la languette 17 est en contact ici directement avec le fond d'une douille de masquage 11 entourant la douille d'allumage 6 pour masquer ses ouvertures 32.

Ainsi aucun fil ou câble ne peut toucher les lames du bilame 12 de prise de courant, qui peuvent se dilater à travers les ouvertures 32, sachant que dans un véhicule automobile l'allume-cigares est implanté dans une région, par exemple au niveau du tableau de bord, où passe de nombreux câbles et fils électriques. On ne risque pas ainsi d'endommager les fils ou câbles, de faire sauter des fusibles et/ou de provoquer un incendie.

Le fond arrière de la douille de masquage 11, électriquement conductrice, ici cylindrique en tôle emboutie, est en contact avec le fond de la douille d'allumage 6 et la vis 14 traverse à isolation électrique lesdits fonds troués centralement à cet effet.

Ici la pièce isolante 15, montée en majeure partie dans la douille 6, présente un nez central traversant les ouvertures centrales des fonds des douilles 6,11, la base de la languette 17 trouée centralement à cet effet, pour pénétrer dans la portion de diamètre réduit de l'ouverture 31 de la rondelle 18.

Ce nez central, formant cheminée, est traversé par la vis 14, qui permet un assemblage à serrage des pièces 12,15,16,11,6,17,18,19 entre elles.

La périphérie externe de ce nez présente au moins un méplat coopérant avec des méplats de forme complémentaire pratiqués dans les ouvertures en coincidence des fonds des douilles 6,11 et de la rondelle 18, les languettes 17 et 19 étant par ailleurs immobilisées par la rondelle 18 de manière précitée. Ainsi on obtient un blocage en rotation, par coopération de formes, des pièces 15,16,6,11,17,18,19 avec serrage de celles-ci de part et d'autre des fonds des douilles 11,6 grâce à la vis 14.

En variante le nez de la pièce isolante 15 peut avoir une forme polygonale par exemple de forme carrée et il en est de même des ouvertures complémentaires précitées.

En variante ces ouvertures et le nez de la pièce 15 peuvent être de forme cylindrique, la pièce 15 présentant latéralement, de manière connue en soi, au moins un picot cylindrique traversant de manière complémentaire les fonds des douilles 6,11 et la rondelle 18.

Ce picot traverse alors également la base de la languette 17 de manière complémentaire ou non.

Plus précisément (figure 5) le picot 129 de forme cylindrique traverse des ouvertures de forme oblongues 128 pratiquées en correspondance dans les douilles 6,11, la largeur des ouvertures 128 étant égale au jeu de montage près au diamètre du picot 129 qui s'engage dans une encoche 130 en forme de U pratiquée dans le bord latéral de la base de la languette 17 opposé au bord latéral de raccordement à la partie axial de la languette 17.

Le fond de ladite encoche 130 est circulaire en ayant un rayon identique, au jeu de montage près, à celui du picot 129. Bien entendu la rondelle isolante 18 est creusé à ce niveau.

La languette 17, ainsi que la douille de masquage et la rondelle 18 sont bloqués en rotation par rapport à la douille d'allumage 6, sachant que la partie axiale de la languette 17 immobilise en rotation la rondelle 18.

D'une manière général les moyens de blocage en rotation précités permettent un indexage de la douille de masquage 11 par rapport à la douille d'allumage 6 et donc la formation d'un détrompeur.

La pièce isolante 15, ici thermiquement isolante, permet également de positionner à jeu les bilames 12,16 et a pour ce faire la forme d'un gobelet avec une jupe d'orientation axiale dirigée vers l'extrémité ouverte de la douille 6 et un fond échancré pour passage des lames des bilames 16 traversant chacune à jeu un passage 28 formé par des ouvertures en coincidence pratiquées dans les fonds des douilles 6,11.

Le nez de la pièce 15 s'étend donc axialement en direction opposée de la jupe échancrée localement pour passage des lames du bilame 12 et ce en correspondance avec les ouvertures 32. La jupe de la pièce 15 est également échancrée pour passage d'au moins une languette d'une pièce de contact supplémentaire 13 avec le bouchon 30 lorsque celui-ci est en position enfoncée.

Cette pièce 13, à section globalement en forme de L, présente une base annulaire interposée entre la tête de la vis 14 et la base du bilame 12 de prise de courant.

Les lames du bilame 12, élastiquement déformables, ont chacune une extrémité libre conformée en forme de crochet dirigé l'un vers l'autre en sorte qu'il est formé une pince propre à coopérer avec la coupelle 10 du bouchon 30 pour maintien de celui-ci en position de chauffage.

Cette coupelle 10, électriquement conductrice, sert de logement à un corps de chauffage, usuellement une résistance chauffante (non visible) décrite par exemple dans le document FR-A-2 457 787 auquel on pourra se reporter pour plus de précision. Le bouchon chauffant 30 ne fait pas partie de l'invention et ne sera pas décrit plus en détail ici.

Pour mémoire on rappellera que ce bouchon 30 est propre à occuper une position d'attente, dans laquelle son pare-cendres 4, entourant la coupelle 10, vient en prise par son extrémité libre profilée (figure 2) avec les languettes de retenue 33, à extrémité libre en forme de crochet (figure 4), de la douille 6.

L'extrémité libre du pare-cendres 4 présente une collerette solidaire d'un anneau 3 en matière plastique permettant également, par surmoulage, la fixation d'une collerette appartenant à un tube-guide 5 avec un fond troué centralement pour formation d'une cheminée permettant le guidage d'un tube de support 8 solidaire d'un noyau 2, en matière électriquement et thermiquement isolante, présentant une queue filetée pour sa solidarisation à un bouton 1 de préhension en matière électriquement isolante. Les pièces 1,2 sont ici en matière plastique, comme l'anneau 3, et appartiennent avec le tube 8 et la coupelle 10 à une partie mobile axialement par rapport à une partie fixe comprenant les pièces 4,5, électriquement conductrices, solidarisées entre elles par l'anneau 3, la pièce 4 entourant la pièce 5. Ces parties sont mobiles l'une par rapport à l'autre à l'encontre d'un ressort à boudin 7 électriquement conducteur interposé entre le fond du tube guide 5 et la face dorsale du noyau 2 engagé à force dans le tube 8. Une rondelle électriquement isolante 9 est interposée axialement entre le fond du tube 8 et le fond de la coupelle 10 assemblés l'un à l'autre par un rivet (non visible) comme décrit dans le document FR-A-2 457 787.

Les pièces 4,5,8 sont en tôle emboutie.

Lorsque l'occupant du véhicule enfonce le bouton de préhension 1, la coupelle 10 se déplace axialement pour écarter les lames du bilame 12 et venir en prise avec celles-ci. Un circuit électrique est alors établi pour chauffage de la résistance chauffante du bouchon 30, sachant que normalement la languette 19 est reliée à la borne positive de la batterie, tandis que la languette 17 est reliée à la borne négative de la batterie.

Le courant électrique, dans cette position de chauffage du bouchon 30, est établi à travers les pièces 19,14,12,10,8,4,5,6 et 17 en sorte que pour une température déterminée de la résistance chauffante du bouchon 30 les lames du bilame 12 s'écartent pour libérer la coupelle 10, qui revient à sa position initiale sous l'action du ressort 7. Il ne reste plus ensuite qu'à extraire le bouchon 30 des languettes 33 pour allumer par exemple une cigarette.

Lorsque, accidentellement, en position de chauffage du bouchon 30, les lames du bilame 12 restent en prise avec la coupelle 10, il se produit un échauffement anormal conduisant le bilame 16 de sécurité à établir un court-circuit franc par coopération ponctuelle de ses lames avec les parties 37 de la languette de masse 17, ce qui provoque une surintensité faisant sauter le fusible de l'allume-cigares, évitant ainsi un risque d'incendie sachant que le corps d'allumage 40 est fixé sur une paroi 50 fixe du véhicule usuellement en matière plastique, tout comme la bague éclairante 60 à collerette ou anneau 61 d'extrémité, que présente ici le corps d'allumage de manière décrite ci-après.

La paroi 50 de montage et de fixation du corps d'allumage 40 peut être le tableau de bord ou une console du véhicule.

On appréciera que la forme en V de l'extrémité des lames du bilame de sécurité 16, en combinaison avec les parties 37, évite tout collage desdites lames sur les parties 37.

Fortuitement un objet peut venir en contact avec le bouton 1 et maintenir celui-ci en position enfoncée sans que l'occupant veuille allumer une cigarette. Il peut s'agir par exemple d'une valise ou d'un paquet mal calé maintenant le bouton 1 en position enfoncée. Dans ce cas un chauffage de la résistance chauffante se produit avec des phénomènes de battement des lames du bilame 12 de prise de courant.

En effet ces lames s'écartent de la coupelle 10 pour une température donnée de la résistance chauffante du bouchon 30, puis reviennent en contact avec la coupelle 10 puisque le bouton 1 reste coincé du fait par exemple que la valise empêche la coupelle 10 de se dégager sous l'action du ressort 7.

Pour éviter cela suivant une caractéristique la coupelle 10 est admise, lorsque le bouton 1 est enfoncé, à coopérer avec la languette axiale de la pièce de contact supplémentaire 13 électriquement conductrice. Cette pièce 13 est reliée électriquement à la borne de la batterie via la vis 14. Ainsi un autre circuit électrique direct est établi et ce indépendamment des oscillations du bilame 12 dont les lames sont admises à venir en contact avec la coupelle 10 et à s'écarter de celle-ci de manière précitée.

La base de cette pièce 13 étant interposée entre la tête de la vis 14 et le disque du bilame 12, il se produit, lorsque le bouton 1 reste fortuitement enfoncé de manière précitée, par échauffement une intervention du bilame de sécurité 16, dont les lames se resserrent pour venir en contact avec les parties 37 de la languette 17. Il se produit alors un court-circuit franc faisant sauter le fusible de sécurité de l'allume-cigares. On évite ainsi de décharger la batterie.

Bien entendu la position axiale de la pièce de contact 13 est déterminée selon les applications.

D'une manière générale cette languette est en retrait axialement par rapport aux crochets du bilame 12 et présente également une extrémité libre déformée pour contact ponctuel avec la coupelle 10 du bouchon 30.

On notera que la nature de la matière du bilame 16 de sécurité ainsi que son épaisseur dépend des applications, ledit bilame 16 étant ici en une matière qui diffère de celle du bilame 12 de prise de courant. La matière du bilame 16 est donc choisie de manière indépendante de celle du bilame 12 et il en est de même en ce qui concerne les épaisseurs des bilames 12,16.

Les caractéristiques de ce bilame 16 sont choisies pour qu'il se déclenche au-delà du temps normal de chauffage du bouchon 30 par exemple au bout de 30 secondes à 1 minute.

Ainsi le bilame de sécurité 16 a une double fonction à savoir une fonction normale de sécurité et une fonction supplémentaire pour éviter les battements des lames du bilame de prise de courant et ménager celui-ci au bénéfice de sa durée de vie.

Ainsi qu'il ressort à l'évidence de la description et des dessins la douille de masquage 11 présente un fond adjacent et relié électriquement au fond de la douille d'allumage 6.

Lesdits fonds peuvent être en contact direct l'un avec l'autre, mais bien entendu en variante une pièce électriquement conductrice peut être interposée entre lesdits fonds assemblés ensemble par l'intermédiaire de l'organe de fixation 14 du bilame 12 de prise de courant.

Cet organe de fixation 14 traverse pour ce faire, de manière précitée, à isolation électrique les fonds des douilles d'allumage 6 et de masquage 11.

Suivant une caractéristique de l'invention la bague éclairante 60 entoure la douille de masquage 11 et présente au moins une languette de fixation 23 élastiquement déformable propre à venir en contact (en appui) avec la face arrière de la paroi fixe 50 présentant une ouverture 51 traversée par la bague 60 et les douilles 6,11. La bague 60 est ici en contact intime avec la douille de masquage 11.

Des moyens de fixation 21 interviennent entre la douille de masquage 11 et la bague éclairante 60 pour fixation de la douille de masquage 11 dans la bague éclairante 60.

La douille d'allumage 6 présente à son extrémité libre ouverte un rebord frontal 62 globalement d'orientation transversale. Ce rebord 62, ici en forme de collerette, est en contact avec la face avant de l'anneau d'extrémité 61 de la bague éclairante 60. La face dorsale ou arrière de cet anneau 61 est en contact (en appui) avec la paroi avant de la paroi fixe 50.

La bague éclairante 60 porte une source d'éclairage 26. Cette bague 60 est, de manière connue en soi, en matière plastique translucide voire transparente et comporte ici venues de moulage deux languettes de fixation 23 diamétralement opposées et semi-découpées.

Ces languettes 23 sont d'orientation axiale et ont en section une forme de coin triangulaire, dont la face avant inclinée est propre à venir en prise avec la face arrière de la paroi fixe 50. Ces languettes 23 sont donc élastiquement déformables et, après assemblage, la paroi fixe 50 est prise en sandwich entre l'anneau 61 de la bague 60 et les faces avant inclinées des coins des languettes 23 permettant ainsi un rattrapage des jeux.

Ici les moyens de fixation 21 sont implantés au niveau de l'extrémité arrière de la bague éclairante 60 (axialement au-delà des languettes 23 en direction du bilame 12) et consistent en des crans issus de moulage de la paroi cylindrique 63 de la bague éclairante 60 et pénétrant chacun dans une ouverture associée pratiquée dans la paroi de la douille de masquage 11. Ces crans, saillants intérieurement par rapport à la paroi 63 de la bague 60, présentent une face inclinée raccordée à une face globalement d'orientation transversale formant épaulement.

Ici deux crans 21 et donc deux ouvertures associées sont prévus en étant diamétralement opposés.

Par ailleurs, la douille de masquage 11 présente, par découpe et pliage, au moins deux pattes 22 ici diamétralement opposées venant en contact avec la paroi de la douille d'allumage 6. Ces pattes 22 sont implantées axialement entre l'extrémité ouverte de la douille de masquage 11 et les moyens de fixation 21 pour ménager ceux-ci ainsi que la bague 60.

Ainsi il est créé des moyens de centrage intervenant entre la douille de masquage 11 et la douille d'allumage 6.

Grâce à cette disposition un espace précis est ménagé entre les parois des douilles 6 et 11, lesdits moyens de centrage étant implantés au voisinage des languettes 23 c'est-à-dire au voisinage de l'extrémité ouverte de la douille de masquage 11.

Initialement les languettes 23 font saillie à l'intérieur de la bague 60 préalablement montée dans l'ouverture 51 de la paroi fixe 50. On notera que la face arrière inclinée des coins des languettes 23 est plus longue que la face avant inclinée de blocage desdits coins, en sorte que l'enfilage de la bague 60 dans l'ouverture 51 est aisé, les languettes 23 s'escamotant vers l'intérieur lors de cet enfilage.

Ainsi on peut créer un ensemble unitaire imperdable comportant les douilles 6,11 avec les différents composants de l'allume-cigares notamment les bilames 12,16 et les languettes 17,19, puis enfiler cet ensemble à l'intérieur de la bague éclairante 60, dont les languettes 23 sont automatiquement soulevées et bloquées au contact de la face arrière de la paroi fixe 50 lors de cet enfilage ; les crans des moyens de fixation 21 pénétrant dans les ouvertures associées de la douille de masquage 11.

Ainsi qu'on l'aura compris on peut monter le corps d'allumage par la face avant de la paroi fixe 50 à travers l'ouverture 51.

Après on monte la source d'éclairage 26 par l'arrière. Plus précisément la source d'éclairage 26, ici une ampoule, est montée à l'intérieur d'un boîtier opaque 20 enfilé à la manière d'un tiroir sur deux pattes 29 d'orientation axiale formant glissière, lesdites pattes 29 étant venues de moulage avec l'extrémité arrière en forme de talon de la bague éclairante 60.

On notera que l'ampoule 26 présente une borne reliée à une languette d'alimentation électrique 24 propre à être reliée à la borne positive de la batterie. La languette 25 s'étend axialement parallèlement à la languette 19.

Le boîtier 20, ici opaque, porte une languette 25 courbe élastiquement déformable propre à venir en contact avec l'extrémité arrière de la douille de masquage et avec le culot de la lampe 26.

On notera, après montage (figure 2), que l'extrémité libre (ou avant) de la douille de masquage 11 est engagée à centrage (en contact intime) dans l'anneau 61. Cette extrémité libre est donc décalée axialement en direction du fond de la douille d'allumage 6 par rapport à la collerette 62, qui en variante peut consister en un rebord roulé comme divulgué dans le document US-A-2 701 297 précité.

En outre des moyens d'indexation angulaires et de guidage interviennent entre la bague éclairante 60 et la seconde pièce d'isolation 18. Ces moyens comportent au moins une saillie 64,65 porté par la périphérie externe de la rondelle 18 propre à être engagée à coulissement axial dans une rainure axiale complémentaire associée que présente intérieurement la paroi cylindrique 63 de la bague 60.

Ici deux saillies 64,65 diamétralement opposées (figure 3) sont prévues à la périphérie interne de la rondelle 18, en sorte que les risques de coincement sont minimisés. Ces saillies 64,65 ont une largeur différente pour formation d'un détrompeur.

Les saillies 64,65 sont fractionnées ici en paire de pattes 64,65 transversales engagées dans des rainures axiales correspondantes (non référencées) de la bague 60.

Bien entendu lesdites rainures sont avantageusement décalées par rapport aux crans des moyens de fixation 21.

Ici les rainures sont formées au niveau des languettes 23 de la bague éclairante 60. Les rainures passent par les fentes délimitant les languettes 23. Ainsi une bonne ventilation est obtenue entre les deux douilles 6,11 grâce aux moyens de centrage 22, au décalage axial de l'extrémité libre de la douille de masquage 11 et aux rainures.

Bien entendu on ne peut prévoir qu'une rainure et qu'une saillie 64,65.

Ainsi on enfile, de manière simple, la rondelle 18 dans lesdites rainures en sorte que les crans des moyens de fixation 21 viendront automatiquement en prise avec leurs ouvertures associées.

Avantageusement la bague 60 présente une saillie 38, fractionnée, ici en deux pattes axiales 38, propre à s'engager dans une encoche correspondante à section en forme de U à fond plat (visible en pointillés à la figure 3) pratiquée dans le bord de l'ouverture 51 de la paroi 50.

En variante l'encoche est délimité centralement par une patte radiale s'engageant entre les deux pattes axiales de la bague 60.

Ainsi la bague éclairante est initialement prépositionnée et ne tournera pas lors de l'enfilage de l'ensemble douille de masquage - douille d'allumage, la saillie 38 étant issue de la face arrière de l'anneau 61 multifonctions.

On appréciera que les languettes 23 sont souples du fait de leur grande longueur axiale.

Avantageusement les ouvertures des moyens de fixations sont oblongues.

Bien entendu comme décrit dans le document FR-A-2 436 939 les languettes 23 peuvent s'étendre transversalement et le boîtier 20 peut être d'un seul tenant avec la bague éclairante 3.

Dans ce cas il faut prévoir une ouverture dans la paroi 50 pour passage du boitier 20.

On appréciera que l'on tire parti de la bague éclairante 60 et que la douille d'allumage 6 avec ses languettes 17,19 est du type standard.

L'allume-cigares selon l'invention est d'un montage aisé et d'une grande sûreté du fait de l'élément de sécurité 16 et de la languette supplémentaire 13.

Bien entendu la présente invention n'est pas limitée à l'exemple de réalisation décrit.

En particulier le nombre de pattes 22 et le nombre de languettes 23 peut être supérieur à deux tout cela dépendant des applications.

Il est possible d'inverser les structures. Ainsi les moyens de fixation peuvent comporter des pattes issues de la douille de masquage 11 et pénétrant dans des évidements associés pratiqués dans la bague éclairante 21.

De même les pattes de centrage 22 peuvent être issues de la douille d'allumage 6. Les bilames 12 et 16 peuvent être en une même matière et avoir la même épaisseur ou une épaisseur différente selon les applications. Le nez de centrage peut être porté par la rondelle 18 et pénétrer dans une creusure associée de la première pièce isolante 15.

Les moyens de fixation peuvent être du type baïonnette notamment lorsque les languettes s'étendent transversalement, par exemple des picots de la douille de masquage étant alors engagés dans des rainures baïonnette de la bague éclairante 60.

La bague 60 peut être éclairée indirectement par une source d'éclairage, par exemple par un guide de lumière.

Ainsi qu'on l'aura compris la bague éclairante 60 est prépositionnée grâce à ces pattes 38, par rapport à la paroi 50.

La douille de masquage 11 est prépositionnée par rapport à la douille d'allumage 6, grâce au moyens de blocage en rotation, tel que le picot 129, décrit ci-dessus, intervenant entre les deux douilles 6,11 et la rondelle 18. La douille de masquage 11 est prépositionnée par rapport à la bagues éclairante grâce aux saillies 64,65 de la rondelle 18 formant moyen d'indexation et de guidage c'est-à-dire détrompeur.

Ainsi la fixation de la douille de masquage 11 à la bague 60 est aisée et automatique surtout lorsque les moyens de fixation 21 sont des moyens d'encliquetage.

Bien entendu la présence du bilame de sécurité 16 n'est pas obligatoire.

Ce bilame peut être remplacé par un autre dispositif de sécurité.

On peut inverser les structures. Le bilame de sécurité peut être au contact du fond de la douille de masquage 11 et être adapté à venir en contact avec la languette 19.

En variante une seule lame peut être prévue.

## Revendications

1. Corps d'allumage pour allume-cigares, notamment pour véhicule automobile, du genre comportant, d'une part, une douille d'allumage (6) électriquement conductrice avec un fond portant intérieurement à isolation électrique, par l'intermédiaire d'un organe de fixation (14) et d'une première pièce d'isolation électrique (15), un bilame (12) de prise de courant, d'une deuxième part, une douille de masquage (11) électriquement conductrice entourant la douille d'allumage (6) pour masquer les ouvertures de dégagement (32), que présente la douille d'allumage (6) au niveau des lames de son dit bilame (12), d'une troisième part, une bague éclairante (60) dotée d'un anneau (61) d'extrémité propre à venir en appui par sa face arrière contre la paroi avant d'une paroi fixe (50) et par sa face avant à servir d'appui à un rebord (62) globalement transversal que présente la douille d'allumage (6) à son extrémité ouverte, caractérisé en ce que la douille de masquage (11) présente un fond adjacent et relié électriquement au fond de la douille d'allumage (6) en étant assemblé à ladite douille d'allumage (6) par l'intermédiaire dudit organe de fixation (14) traversant pour ce faire à isolation électrique les fonds des douilles d'allumage (6) et de masquage (11), en ce que la bague éclairante (60) entoure la douille de masquage (11) et présente au moins une languette de fixation (23) élastiquement déformable et propre à venir en contact avec la face arrière de la paroi fixe (50) et en ce que des moyens de fixation (21) interviennent entre la douille de masquage (11) et la bague éclairante (60) pour fixation de la douille de masquage (11) à la bague éclairante (60).

2. Corps d'allumage selon la revendication 1, caractérisé en ce que le fond de la douille de masquage (11) est en contact direct avec le fond de la douille d'allumage (6).

3. Corps d'allumage selon la revendication 1 ou 2, caractérisé en ce que l'extrémité avant de la douille de masquage (11) est engagée à centrage dans l'anneau (61) de la bague éclairante (60) et en ce que ladite douille de masquage (11) est en contact intime avec la bague éclairante (60).

4. Corps d'allumage selon la revendication 3, caractérisé en ce que des moyens de centrage (22) interviennent entre la douille d'allumage (6) et la douille de masquage (11).

5. Corps d'allumage selon la revendication 4, caractérisé en ce que les moyens de centrage (22) consistent en des pattes issues par découpe et pliage de la douille de masquage (11) et venant en contact avec la paroi de la douille d'allumage (6), lesdites pattes (22) étant implantées au voisinage de la languette de fixation (23).

6. Corps d'allumage selon la revendication 1, caractérisé en ce que des moyens d'indexation angulaires et de guidage (64,65) interviennent entre la bague éclairante (60) et une seconde pièce d'isolation électrique (18) portée extérieurement par le fond de la douille d'allumage (6).

7. Corps d'allumage selon la revendication 6, caractérisé en ce que les moyens d'indexation angulaires et de guidage (64,65) consistent en au moins une saillie (64,65) portée par la périphérie externe de la seconde pièce d'isolation électrique (18) propre à être engagée dans une rainure axiale associée que présente intérieurement la paroi (63) de la bague éclairante (60).

8. Corps d'allumage selon la revendication 7, caractérisé en ce que deux saillies (64,65), fractionnées en paire de pattes diamétralement opposées, sont prévues à la périphérie externe de la seconde rondelle d'isolation électrique (18), et en ce que, pour formation d'un détrompeur, lesdites saillies (64,65) ont des largeurs différentes.

9. Corps d'allumage selon la revendication 1, caractérisé en ce que la languette de fixation (23) s'étend axialement et a en section une forme de coin.

10. Corps d'allumage selon la revendication 1, caractérisé en ce que les moyens de fixation (21) consistent en des moyens d'encliquetage implantés à l'arrière de la bague éclairante (60).

11. Corps d'allumage selon la revendication 10, caractérisé en ce que la bague éclairante (60) présente intérieurement des crans propres à être engagés dans des ouvertures associées ménagées dans la douille de masquage (11).

12. Corps d'allumage selon la revendication 1, caractérisé en ce que la bague éclairante (60) porte une source d'éclairage (26).

13. Corps d'allumage selon la revendication 1, caractérisé en ce que des moyens de blocage en rotation (128,129,130) interviennent entre la douille d'allumage (6) et la douille de masquage (11).

## Claims

1. A lighter body for a cigar lighter, especially for a motor vehicle, of the kind comprising, firstly an electrically conductive lighter shell (6) with a base portion carrying internally, with electrical insulation, by means of an interposed fastening member (14) and a first electrically insulating member (15), a pinch clip (12) for supplying current, secondly an electrically conductive masking shell (11) surrounding the lighter shell (6) so as to mask the relief apertures (32) defined by the lighter shell (6) at the level of the fingers of its said pinch clip (12), thirdly an illuminating sleeve (60) having an end ring (61) adapted to come into engagement through its rear face against the front wall of a fixed wall (50), and to act through its front face as an abutment for a generally transverse flange (62) formed on the lighter shell (6) at its open end, characterised in that the masking shell (11) has a base portion adjacent, and electrically connected, to the base portion of the lighter shell (6), being assembled to the said lighter shell (6) by means of the said fastening member (14) which for that purpose extends through, and is electrically insulated from, the base portions of the lighter shell (6) and masking shell (11), in that the illuminating sleeve (60) surrounds the masking shell (11) and has at least one fastening tongue (23) which is elastically deformable and adapted to come into contact with the rear face of the fixed wall (50), and in that fastening means (21) are interposed between the masking shell (11) and the illuminating sleeve (60), for fastening the masking shell (11) to the illuminating sleeve (60).

2. A lighter body according to Claim 1, characterised in that the base portion of the masking shell (11) is in direct contact with the base portion of the lighter shell (6).

3. A lighter body according to Claim 1 or Claim 2, characterised in that the front end of the masking shell (11) is engaged and centred in the ring (61) of the illuminating sleeve (60), and in that the said masking sleeve (11) is in intimate contact with the illuminating sleeve (60).

4. A lighter body according to Claim 3, characterised in that centring means (22) act between the lighter shell (6) and the masking shell (11).

5. A lighter body according to Claim 4, characterised in that the centring means (22) consist of lugs formed by stamping out and bending, to project from the masking sleeve (11) and to make contact with the wall of the lighter shell (6), the said lugs (22) being located in the vicinity of the fastening tongue (23).

6. A lighter body according to Claim 1, characterised in that means (64, 65), for angular indexing and for guiding purposes, act between the illuminating sleeve (60) and a second electrical insulating member (18) which is carried externally by the base portion of the lighter shell (6).

7. A lighter body according to Claim 6, characterised in that the angular indexing and guide means (64, 65) consist of at least one projecting element (64, 65) carried by the outer periphery of the second electrical insulating member (18) and adapted to be engaged in an associated axial groove formed internally on the wall (63) of the illuminating sleeve (60).

8. A lighter body according to Claim 7, characterised in that two projecting elements (64, 65), divided into diametrically opposed pairs of lugs, are arranged at the outer periphery of the second electrical insulating ring (18), and in that the said projecting elements (64, 65) are of different widths so as to define a locating means (9).

9. A lighter body according to Claim 1, characterised in that the fastening tongue (23) extends axially and has a wedge-shaped cross section.

10. A lighter body according to Claim 1, characterised in that the fastening means (21) consist of snap-fitting means located behind the illuminating sleeve (60).

11. A lighter body according to Claim 10, characterised in that the illuminating sleeve (60) has internal projecting elements adapted to be engaged in associated apertures formed in the masking shell (11).

12. A lighter body according to Claim 1, characterised in that the illuminating sleeve (60) carries a light source (26).

13. A lighter body according to Claim 1, characterised in that rotational stop means (128, 129, 130) are operatively interposed between the lighter shell (6) and the masking shell (11).

## Patentansprüche

1. Anzündkörper für Zigarettenanzünder, insbesondere für Kraftfahrzeuge, umfassend erstens eine elektrisch leitende Anzündhülse (6) mit einem Boden, der innen elektrisch isoliert über ein Befestigungsorgan (14) und ein erstes elektrisches Isolierteil (15) einen Stromanschlußbimetallstreifen (12) trägt, zweitens eine elektrisch leitende Abdeckhülse (11), die die Anzündhülse (6) umgibt, um die Freigabeöffnungen (32) abzudecken, die die Anzündhülse (6) in Höhe der Lamellen ihres besagten Bimetallstreifens (12) aufweist, drittens einen Leuchtring (60) mit einem Abschlußring (61), der mit seiner Rückseite an der Vorderseite einer ortsfesten Wand (50) zur Anlage kommen und mit seiner Vorderseite als Auflage für eine insgesamt quer verlaufende Randleiste (62) dienen kann, die die Anzündhülse (6) an ihrem offenen Ende aufweist, **dadurch gekennzeichnet**, daß die Abdeckhülse (11) einen dem Boden der Anzündhülse (6) zugekehrten und elektrisch mit diesem verbundenen Boden aufweist, wobei sie mit der besagten Anzündhülse (6) über das besagte Befestigungsorgan (14) zusammengefügt wird, das dazu elektrisch isoliert durch die Böden der Anzünd- (6) und Abdeckhülse (11) hindurchgeht, daß der Leuchtring (60) die Abdeckhülse (11) umgibt und wenigstens eine elastisch verformbare Befestigungszunge (23) aufweist, die mit der Rückseite der ortsfesten Wand (50) in Kontakt kommen kann, und daß Befestigungsmittel (21) zwischen der Abdeckhülse (11) und dem Leuchtring (60) zum Einsatz kommen, um die Abdeckhülse (11) am Leuchtring (60) zu befestigen

2. Anzündkörper nach Anspruch 1, **dadurch gekennzeichnet,** daß der Boden der Abdeckhülse (11) in direktem Kontakt mit dem Boden der Anzündhülse (6) steht.

3. Anzündkörper nach Anspruch 1 oder 2, **dadurch gekennzeichnet,** daß das vordere Ende der Abdeckhülse (11) zentriert in den Abschlußring (61) des Leuchtrings (60) eingesetzt ist und daß die besagte Abdeckhülse (11) in engem Kontakt mit dem Leuchtring (60) steht.

4. Anzündkörper nach Anspruch 3, **dadurch gekennzeichnet,** daß zwischen der Anzündhülse (6) und der Abdeckhülse (11) Zentriermittel (22) zum Einsatz kommen.

5. Anzündkörper nach Anspruch 4, **dadurch gekennzeichnet,** daß die Zentriermittel (22) aus Ansätzen bestehen, die durch Stanzen und Biegen aus der Abdeckhülse (11) herausgearbeitet sind und mit der Wand der Anzündhülse (6) in Kontakt kommen, wobei die besagten Ansätze (22) in der Nähe der Befestigungszunge (23) angeordnet sind.

6. Anzündkörper nach Anspruch 1, **dadurch gekennzeichnet,** daß Winkelvorpostionierungs- und Führungsmittel (64, 65) zwischen dem Leuchtring (60) und einem zweiten elektrischen Isolierteil (18) zum Einsatz kommen, das außen am Boden der Anzündhülse (6) angebracht ist.

7. Anzündkörper nach Anspruch 6, **dadurch gekennzeichnet,** daß die Winkelvorpositionierungs- und Führungsmittel (64, 65) aus wenigstens einem Vorsprung (64, 65) bestehen, der am äußeren Umfang des zweiten elektrischen Isolierteils (18) angebracht ist und in eine zugehörige axiale Nut eingesetzt werden kann, die die Wand (63) des Leuchtrings (60) innen aufweist.

8. Anzündkörper nach Anspruch 7, **dadurch gekennzeichnet,** daß zwei in ein Paar diametral gegenüberliegende Ansätze unterteilte Vorsprünge (64, 65) am äußeren Umfang der zweiten elektrischen Isolierscheibe (18) vorgesehen sind und daß die besagten Vorsprünge (64, 65) unterschiedliche Breiten aufweisen, um eine Einbaumarkierung zu bilden.

9. Anzündkörper nach Anspruch 1, **dadurch gekennzeichnet,** daß sich die Befestigungszunge (23) axial erstreckt und einen keilförmigen Querschnitt besitzt.

10. Anzündkörper nach Anspruch 1, **dadurch gekennzeichnet,** daß die Befestigungsmittel (21) aus Einrastmitteln bestehen, die an der Rückseite des Leuchtrings (60) angeordnet sind.

11. Anzündkörper nach Anspruch 10, **dadurch gekennzeichnet**, daß der Leuchtring (60) innen Rasten aufweist, die in zugehörige Öffnungen eingesetzt werden können, die in die Abdeckhülse (11) eingearbeitet sind.

12. Anzündkörper nach Anspruch 1, **dadurch gekennzeichnet,** daß der Leuchtring (60) eine Beleuchtungsquelle (26) trägt.

13. Anzündkörper nach Anspruch 1, **dadurch gekennzeichnet**, daß zwischen der Anzündhülse (6) und der Abdeckhülse (11) Drehsicherungsmittel (128, 129, 130) zum Einsatz kommen.
